# EUROPÄISCHE PATENTANMELDUNG

(11) **EP 0 870 604 A2**
(43) Veröffentlichungstag der Anmeldung: **14.10.1998**
(21) Anmeldenummer: 98106417.3
(22) Anmeldetag: 07.04.1998
(51) Int. Cl.: B32B 27/34, B32B 27/32, B65D 65/40

(54) **Verpackungsfolie für Medizinartikel**

(30) Priorität: 09.04.1997 DE 19714730
(71) Anmelder: BASF AKTIENGESELLSCHAFT, 67056 Ludwigshafen (DE)
(72) Erfinder: Pipper, Gunter, 67098 Bad Dürkheim (DE); Grutke, Stefan, Dr., 67434 Neustadt (DE); Glück, Alexander, Dr., 67251 Freinsheim (DE); Goetz, Walter, Dr., 67067 Ludwigshafen (DE); Richter, Konrad, Dr., 67069 Ludwigshafen (DE)
(74) Vertreter: Isenbruck, Günter, Dr.

(57) **Zusammenfassung**

Ein Copolyamid aus 1,6-Diaminohexan als Diamin-Komponente A und einer Dicarbonsäure-Komponente B aus 60 bis 90 Gew.-% Adipinsäure als Komponente B1 und 10 bis 40 Gew.-% mindestens einer aromatischen, nichtlinearen Dicarbonsäure als Komponente B2 wird zur Herstellung von Folien verwendet.

## Beschreibung

Die Erfindung betrifft Verpackungsfolien für Medizinartikel, insbesondere die Verwendung eines speziellen Copolyamids zur Herstellung von (Mehrschicht)folien, entsprechende (Mehrschicht)folien, Verfahren zu ihrer Herstellung, deren Verwendung und Verpackungen und Behältnisse daraus.

Ein- und mehrschichtige Folien, die eine Polyamidschicht aufweisen, sind bekannt.

Bei der Herstellung von Breitschlitz- oder Blasfolien aus Polyamiden wird vor allem Polyamid 6, meist coextrudiert mit Polyolefinen eingesetzt. Die Folien werden dabei für Verpackungszwecke verwendet. Polyamid 6 wird dabei vor allem wegen seiner mechanischen Eigenschaften, wie hoher Festigkeit, hoher Durchstichbeständigkeit, hoher Wärmeformbeständigkeit und vor allem hoher Gasbarriere, insbesondere für Sauerstoff, eingesetzt. Eine hohe Wärmeformbeständigkeit ist für die Sterilisierbarkeit der Verpackung notwendig. Die Sauerstoffbarriere ist insbesondere bedeutsam bei der Herstellung von Beuteln zur Aufnahme von Nahrungsmitteln zur intravenösen Ernährung, wie Fettsäurelösungen oder Aminosäurelösungen, die vor dem Einfluß von Sauerstoff geschützt werden müssen. Mechanische Eigenschaften sind bedeutsam bei der Herstellung von Blisterverpackungen, beispielsweise Verpackungen, in denen medizinische Geräte, wie Operationsbestecke nach jeder Verwendung und anschließender Reinigung verpackt und dann sterilisiert werden, um die Geräte so bis zur nächsten Verwendung steril zu halten.

Aufgrund der geringen Wasserbarriere von Polyamiden werden diese häufig mit Polyolefinen coextrudiert, um so eine Verpackung mit sowohl hoher Sauerstoff- als auch hoher Wasserbarriere zu erhalten.

Polyamid 6 sowie darauf basierende Copolyamide weisen jedoch immer einen Restmonomergehalt an Caprolactam und Oligomeren auf, die aus dem Polyamid oder Copolyamid austreten können. Deshalb ist die Anwendung für medizinische Artikel nicht immer möglich oder zugelassen. Andere, caprolactamfreie Polyamide, wie PA66 oder andere Werkstoffe, wie PET weisen jedoch einen so hohen Schmelzpunkt auf, daß sie nicht mit Polyolefinen coextrudierbar sind.

Aus diesem Grund werden medizinische Verpackungsfolien häufig aus weichmacher-haltigem PVC hergestellt, das aber sowohl aufgrund seines Gehalts an potentiell schädlichem Weichmacher als auch aufgrund des bei seiner Verbrennung im Klinikmüll entstehenden HCl unerwünscht ist und durch eine halogenfreie Folie ersetzt werden sollte.

In der DE-A-44 34 899 sind teilaromatische Copolyamide aus Hexamethylendiamin, Metaxylylendiamin, Adipinsäure und Sebacinsäure beschrieben. Aus den Copolyamiden werden Folien hergestellt, die als Verpackungen für Nahrungsmittel, Getränke, medizinische, chemische, biologische und pharmazeutische Produkte eingesetzt werden können. Auch Mehrschichtverbundfolien werden aufgeführt. Die beschriebenen Folien weisen einen niedrigen Schmelzpunkt und eine geringe Kristallinität auf.

Aufgabe der Erfindung ist die Bereitstellung von Polyamidfolien, die frei von Caprolactam oder anderen toxikologisch bedenklichen Monomeren sind, die mit Polyolefinen, insbesondere Polyethylen und Polypropylen coextrudierbar sind und die polyamidtypische Eigenschaften, wie Festigkeit, Zähigkeit und Wärmeformbeständigkeit aufweisen. Die Kristallinität soll ebenso wie der Schmelzpunkt ausreichend hoch sein, um eine gute Wärmeformbeständigkeit und damit Siegelfähigkeit und Sterilisierbarkeit bei hohen Temperaturen, wie auch eine hohe Festigkeit und gute Verarbeitbarkeit zu gewährleisten.

Die Aufgabe wird erfindungsgemäß gelöst durch Verwendung eines Copolyamids aus 1,6-Diaminohexan als Diamin-Komponente A und einer Dicarbonsäure-Komponente B aus 60 bis 90 Gew.-% Adipinsäure als Komponente B1 und 10 bis 40 Gew.-% mindestens einer aromatischen, nichtlinearen Dicarbonsäure als Komponente B2 zur Herstellung von Folien.

Copolyamide aus 1,6-Diaminohexan, Adipinsäure und z.B. Isophthalsäure sind an sich bekannt.

In der DE-C-43 21 247 sind Polyamid-Harzmassen beschrieben, die neben Hexamethylenadipinsäureamid-Einheiten aus Adipinsäure und 1,6-Diaminohexan auch 10 bis 25 Gew.-% eines Hexamethylenisophthalamids aus Isophthalsäure und 1,6-Diaminohexan enthalten. Zudem enthalten die Harzmassen 5 bis 70 Gew.-% mindestens eines anorganischen Füllstoffs, insbesondere Glasfasern. Die Formmassen sollen homogen sein, gute Verformungseigenschaften und einen hohen Oberflächenglanz aufweisen, bei gleichzeitig hoher Festigkeit, Steifheit und Dimensionsstabilität. Insbesondere wird ein hoher Oberflächenglanz der Formmassen angestrebt.

In JP-A 05 339 494 sind Harzzusammensetzungen mit hoher Festigkeit und Steifheit, niedriger Wasserabsorption und gutem Aussehen beschrieben. Sie enthalten beispielsweise 20 Gew.-% eines halbaromatischen Polyamidharzes aus 50 Gew.-% Hexamethylenadipamid-Einheiten aus Adipinsäure und 1,6-Diaminohexan, 30 Gew.-% Hexamethylendiisophthalamid-Einheiten aus Isophthalsäure und 1,6-Diaminohexan und 20 Gew.-% Hexamethylentere-phthalamid-Einheiten aus Terephthalsäure und 1,6-Diaminohexan neben 80 Gew.-% eines Polyphenylenetherharzes.

In der WO 91/13194 sind verbesserte Ausgangsmaterialien zur Herstellung von Nylongarnen beschrieben. Es werden beispielsweise statistische Copolymere aus 87 Gew.-% Adipinsäure/1,6-Diaminohexan und 13 Gew.-% Isophthalsäure/1,6-Diaminohexan beziehungsweise 92 Gew.-% Adipinsäure/1,6-Diaminohexan und 8 Gew.-% Isophthalsäure/1,6-Diaminohexan beschrieben. Aus ihnen lassen sich gute Garne zur Herstellung von Teppichen erhalten.

Nachstehend werden das Copolyamid, die Folien oder Mehrschichtfolien, Verfahren zur ihrer Herstellung und deren Verwendung näher erläutert.

### Copolyamide

Die erfindungsgemäß verwendeten Copolyamide sind aufgebaut aus 1,6-Diaminohexan als Diamin-Komponente A und einer Dicarbonsäure-Komponente B. Dabei wird in der Regel ein etwa oder genau stöchiometrisches Verhältnis an Mengen von 1,6-Diaminohexan und Dicarbonsäure-Komponente eingesetzt. Das Verhältnis von Diamin-Komponente A zu Dicarbonsäure-Komponente B beeinflußt den Endgruppenaufbau des Copolyamids. Wird mit einem Überschuß an Diamin-Komponente A gearbeitet, so wird in der Regel ein aminoterminiertes Copolyamid erhalten. Bei Verwendung eines Dicarbonsäureüberschusses wird ein säureterminiertes Copolyamid erhalten. Die Dicarbonsäure-Komponente B ist zusammengesetzt aus 60 bis 90, vorzugsweise 65 bis 85, insbesondere 70 bis 80 Gew.-% Adipinsäure als Komponente B1 und 10 bis 40, vorzugsweise 15 bis 35, insbesondere 20 bis 30 Gew.-% mindestens einer aromatischen, nicht-linearen Dicarbonsäure als Komponente B2. Beispiele geeigneter aromatischer, nicht-linearer Dicarbonsäuren sind Isophthalsäure, 4-tert.-Butylisophthalsäure, Diphenylmethandicarbonsäure, Oxydibenzolsäure und 2,6-Naphthalindicarbonsäure. Vorzugsweise ist Komponente B2 Isophthalsäure.

Die erfindungsgemäß verwendeten Copolyamide werden vorzugsweise hergestellt durch diskontinuierliche oder kontinuierliche Kondensation einer wäßrigen Lösung der Monomerkomponenten bei einem Druck in einem Bereich von 6 bis 45 bar und einer Temperatur im Bereich von 250 bis 330°C.

Bevorzugt wird so lediglich ein Präpolymer mit einer Viskositätszahl (VZ: gemessen nach ISO 307 an 0,5%iger Lösung in 96%iger Schwefelsäure bei 20°C) von 50 bis 130 ml/g, bevorzugt 60 bis 100 ml/g erzeugt und dieses durch Festphasenkondensation mit heißem Inertgas, bevorzugt Stickstoff oder überhitztem Wasserdampf, drucklos bei einer Temperatur im Bereich von 130 bis 200°C, bevorzugt 150 bis 175°C, und Verweilzeiten von 3 bis 48 Stunden zum Endmolekulargewicht, gemessen als VZ von 150 bis 280 ml/g, bevorzugt 180 bis 250 ml/g, besonders bevorzugt 195 bis 225 ml/g, nachkondensiert.

Das Verfahren wird dabei vorzugsweise kontinuierlich durchgeführt. Bevorzugte Verfahrensbedingungen und die Durchführung des Verfahrens sind beispielsweise in der DE-A-33 21 579 beschrieben.

Das Verfahren kann auch diskontinuierlich geführt werden.

Die erfindungsgemäß verwendeten Copolyamide weisen vorzugsweise einen Schmelzpunkt von 190 bis 250, besonders bevorzugt 210 bis 240, insbesondere 220 bis 230°C auf. Ein höherer Schmelzpunkt sollte vermieden werden, um die Coextrusion mit Polyolefinen zu ermöglichen. Der Schmelzpunkt sollte andererseits ausreichend hoch sein, um eine günstige Wärmeformbeständigkeit und damit Siegelfähigkeit und Sterilisierbarkeit bei hohen Temperaturen, wie auch eine hohe Festigkeit und gute Verarbeitbarkeit zu gewährleisten.

Die erfindungsgemäßen Copolyamide sind bevorzugt teilkristallin mit einer Kristallisationsenthalpie von vorzugsweise 20 bis 60, besonders bevorzugt 25 bis 56, insbesondere 30 bis 50 J/g.

Der Schmelzpunkt und die Kristallisationsenthalpie werden dabei durch DSC-Messung nach ISO 3146 bestimmt, wobei die Kristallisatonsenthalpie (Hₘ) beim Abkühlen mit 20 K/min und der Schmelzpunkt Tₘ beim zweiten Aufheizen mit 20 K/min ermittelt werden.

Eine zu geringe Kristallinität sowie ein zu geringer Schmelzpunkt führten zu einer schlechten Siegelfähigkeit der Folie: Wenn beispielsweise ein Beutel durch Heißsiegeln unter Druck verschweißt werden soll, erweicht nicht nur die Polyolefinschicht, was zum Verkleben erwünscht ist, sondern auch die Polyamidschicht, so daß eine zu dünne Siegelnaht mit geringer Festigkeit entsteht. Ferner führt eine zu geringe Kristallinität zum Erweichen beim Sterilisieren bei hohen Temperaturen. Eine nur geringfügig- oder nichtkristalline Polyamidfolie zeigt darüber hinaus eine sehr hohe Haft- und Gleitreibung (Blocken) und ist deshalb schwer zu verarbeiten.

Die Viskositätszahl des erfindungsgemäß verwendeten Copolyamids beträgt vorzugsweise 150 bis 280, besonders bevorzugt 180 bis 250, insbesondere 195 bis 225 ml/g. Dabei wird die Viskositätszahl (VZ) am Granulat nach ISO 307 an einer 0,5%igen Lösung in 96%iger Schwefelsäure bei 20°C bestimmt.

Die Menge an mit Methanol extrahierbaren Verbindungen beträgt vorzugsweise weniger als 0,2, besonders bevorzugt weniger als 0,15, insbesondere 0,1 oder weniger Gew.-%. Der Extrakt in Methanol wird dabei nach ISO 599 bestimmt.

Die Sauerstoffpermeabilität beträgt vorzugsweise weniger als 50, besonders bevorzugt 40 oder weniger, insbesondere weniger als 35 ml/m² d bar, bestimmt nach ASTM 3985-1 bei 20°C und 100 % relativer Feuchtigkeit, berechnet auf 100 µm Folienstärke.

Vorzugsweise sind die Folien hochtransparent. Die Lichtstreuung ist somit gering. Vorzugsweise beträgt der Streuwert, bestimmt nach ASTM D1003, weniger als 7, vorzugsweise 2 oder weniger, insbesondere weniger als 0,4 %.

Die Reißdehnung, im Zugversuch nach ISO 527 bestimmt, beträgt vorzugsweise mindestens 300 %, besonders bevorzugt mindestens 400 %, insbesondere mindestens 500 %.

Beim Durchstich-Test beträgt die Brucharbeit in Nmm vorzugsweise mindestens 1000, besonders bevorzugt mindestens 2000, insbesondere mindestens 3000 Nmm. Die Brucharbeit wird dabei auf einer Zwick-Zugprüfmaschine durch Durchstechen einer Folienscheibe von 50 mm Durchmesser mit einer halbkugelförmigen Kalotte von 20 mm Durchmesser bei einer Geschwindigkeit von 50 mm/min bestimmt. Dabei werden Kraft und Weg registriert und das Integral bis zum Bruch bestimmt.

Die Globalmigration beträgt vorzugsweise weniger als 3, besonders bevorzugt weniger als 2,5, insbesondere weniger als 2 mg/dm².

Die spezifische Migration von ε-Caprolactam (CL) beträgt vorzugsweise weniger als 0,5 mg/dm². Die spezifische Migration von Hexamethylendiamin (HMD) beträgt vorzugsweise weniger als 0,3, besonders bevorzugt weniger als 0,2 mg/dm². Globalmigration sowie spezifische Migration werden dabei gemäß EG-Richtlinie 87/711/EWG und ENV 1186-3 bestimmt: allseitige Lagerung durch völliges Eintauchen in Wasser; Lagerbedingungen: 10 Tage, 40°C; Oberflächen/Volumen-Verhältnis 25 dm²/l.

Die Folie weist dabei vorzugsweise ein solches Eigenschaftsprofil auf, daß sie sich nicht in nachteiliger Weise beim Sterilisieren bei hoher Temperatur verändert. Typische Sterilisierbedingungen sind 121 °C, 4 bar, 30 min.

Die vorstehend aufgeführten Eigenschaftsprofile beziehen sich nicht nur auf die Folien aus Copolyamiden, sondern auch auf alle nachstehend beschriebenen Mehrschichtfolien.

Die Folie aus einem Copolyamid, wie es vorstehend definiert ist, weist vorzugsweise eine Dicke von 10 bis 200, besonders bevorzugt 25 bis 120, insbesondere 40 bis 80 µm auf. Dabei handelt es sich vorzugsweise um eine Blasfolie oder Breitschlitzfolie. Die bevorzugten Werte beziehen sich auf die unverstreckte Folie, für verstreckte Folien können Dicken von 10 bis 25 mm bevorzugt sein.

Die erfindungsgemäß zur Herstellung von Folien verwendeten Copolyamide können als Einschichtfolie oder als Mehrschichtfolie eingesetzt werden. Neben der vorstehend beschriebenen Folie aus dem Copolyamid betrifft die Erfindung auch eine Mehrschichtfolie aus
mindestens einer Schicht P eines Copolyamids, wie es vorstehend definiert ist, wobei die Schichtdicke 10 bis 200 µm beträgt,
mindestens einer Schicht O eines Polyolefins, ausgewählt aus Homo- oder Copolymerisaten des Ethylens und Propylens und
mindestens einer Schicht H eines Haftvermittlers für die Schichten P und O,
gegebenenfalls mindestens einer Schicht V eines zu mindestens 90 % verseiften Copolymerisats aus Ethylen und Vinylacetat, die vorzugsweise direkt benachbart zu einer Schicht P ist,
   wobei jeweils zwischen Schichten P und O eine Schicht H angeordnet ist.

Vorzugsweise beträgt die Dicke der Schicht V 3 bis 20 µm. In der Regel wird keine Haftvermittlerschicht zwischen der Schicht V und einer Schicht P benötigt.

Die Mehrschichtfolie weist dabei bis zu 9, insbesondere bis zu 5 Schichten auf. Besonders bevorzugt sind Mehrschichtfolien mit 3 oder 5 Schichten.

Die Schichtdicke beträgt für die Schichten O und P vorzugsweise 10 bis 100, besonders bevorzugt 20 bis 50, insbesondere 24 bis 40 µm. Die Schichtdicke der Schicht H beträgt vorzugsweise 0,5 bis 12, besonders bevorzugt 1 bis 10, insbesondere 1,3 bis 8 µm. Durch Verstrecken können wiederum Kleinere Schichtdicken resultieren, wie nachstehend angegeben.

Die Schicht P besteht aus einem vorstehend beschriebenen erfindungsgemäß verwendeten Copolyamid.

Die Schicht O besteht aus einem Polyolefin, ausgewählt aus Homo- oder Copolymerisaten des Ethylens und Propylens. Das Polyolefin weist dabei im allgemeinen einen Schmelzpunkt von mehr als 90, vorzugsweise von mehr als 125 und insbesondere von 135 bis 160°C auf.

Geeignete Polyethylene sind Polyethylene sehr niedriger (LLD-PE), niedriger (LD-PE), mittlerer (MD-PE) und hoher Dichte (HD-PE). Es handelt sich dabei um kurz- oder langkettenverzweigte oder lineare Polyethylene, die in einem Hochdruckprozeß in Gegenwart von Radikalstartern (LD-PE) oder in einem Niederdruckprozeß in Gegenwart von sogenannten komplexen Initiatoren, wie Phillips- oder Ziegler-Natta-Katalysatoren (LLD-PE, MD-PE, HD-PE) hergestellt werden. Die Kurzkettenverzweigungen im LLD-PE oder MD-PE werden durch Copolymerisation mit α-Olefinen, wie Buten, Hexen oder Octen eingeführt.

Die Fließfähigkeit, gemessen als Schmelzindex MVI, beträgt allgemein 0,05 bis 35 g/10 min. Der Schmelzflußindex entspricht dabei der Menge an Polymerisat, die innerhalb von 10 Minuten aus der nach DIN 53 735 genormten Prüfvorrichtung bei einer Temperatur von 190°C und 2,16 kg Belastung ausgepreßt wird.

Bevorzugt wird als Polyolefin in der Schicht O Polypropylen eingesetzt.

Geeignete Polypropylene sind bekannt und werden beispielsweise im Kunststoffhandbuch Band IV, Polyolefine, Carl Hauser Verlag, München beschrieben.

Der Schmelzindex MVI nach DIN 53 735 beträgt dabei im allgemeinen 0,3 bis 80 g/10 min, vorzugsweise 0,5 bis 35 g/10 min bei 230°C und 2,16 kg Belastung.

Die Herstellung derartiger Polypropylene erfolgt üblicherweise durch Niederdruckpolymerisation mit metallhaltigen Katalysatoren, beispielsweise mit Hilfe von titan- und aluminiumhaltigen Ziegler-Katalysatoren. Es können insbesondere auch Ethylen/Propylen-Copolymere eingesetzt werden. Dabei können in unterschiedlichen Schichten O unterschiedliche Polyolefine eingesetzt werden. Auch mit Metallocen-Katalysatoren hergestellte Ethylen- oder Propylen-Homo- oder -Copolymere sind verwendbar.

In unterschiedlichen Schichten P können unterschiedliche Copolyamide eingesetzt werden.

Der Haftvermittler für die Schichten P und O, der als Schicht H jeweils zwischen 2 Schichten P und O angeordnet ist, ermöglicht eine gute Haftung zwischen den Schichten P und O. Es handelt sich hierbei um ein Copolymer, das eine ausreichende Affinität sowohl zur Schicht P als auch zur Schicht O aufweist. Entsprechend wird die Grenzflächenspannung zwischen Schicht P und Schicht O reduziert, wobei eine bessere Phasenhaftung erzielt wird.

Als Haftvermittler geeignete Polymere sind die bei der Schicht O beschriebenen Polyolefine, die 0,1 bis 20, vorzugsweise 0,2 bis 10 und insbesondere 0,2 bis 5 Gew.-%, bezogen auf die Gesamtmenge des Haftvermittlers, an funktionellen Monomeren enthalten.

Unter funktionellen Monomeren werden Carbonsäure-, Säureanhydrid-, Säureamid-, Säureimid-, Carbonsäureester-, Amino-, Hydroxyl-, Epoxid-, Oxazolin-, Urethan-, Harnstoff- oder Lactamgruppen enthaltende Monomere verstanden, die zusätzlich eine reaktive Doppelbindung aufweisen.

Beispiele hierfür sind Methacrylsäure, Maleinsäure, Maleinsäureanhydrid, Fumarsäure, Itaconsäure, wie auch die Alkylester der vorstehenden Säuren, oder deren Amide, Maleinsäureimid, Allylamin, Allylalkohol, Glycidylmethacrylat, Vinyl- und Isopropenyloxazolin und Methacryloylcaprolactam. Vorzugsweise werden Maleinsäure oder Maleinsäureanhydrid eingesetzt.

Man kann die funktionellen Monomere entweder durch Copolymerisation oder Pfropfung in die Polymerkette einführen. Die Pfropfung kann entweder in Lösung oder in der Schmelze erfolgen, wobei gegebenenfalls Radikalstarter, wie Peroxide, Hydroperoxide, Perester und Percarbonate mitverwendet werden können.

Vorzugsweise wird ein Polypropylen eingesetzt, das zu 1 bis 1,5 Gew.-%, insbesondere etwa 1,2 Gew.-% mit Maleinsäureanhydrid radikalisch gepfropft ist. Der Schmelzindex MVI beträgt dabei vorzugsweise 3 bis 20, besonders bevorzugt 5 bis 15, insbesondere 8 bis 10 g/10 min bei einer Temperatur von 230°C und 2,16 kg Belastung.

Besonders bevorzugt ist eine 3-Schicht-Folie aus einer Schicht P des Copolyamids mit einer Schichtdicke von 15 bis 80 µm, einer Schicht H aus einem mit carbonsäuregruppenmodifizierten Polypropylen mit einer Schichtdicke von 0,5 bis 12 µm und einer Schicht O aus Polypropylen mit einer Schichtdicke von 15 - 80 µm oder eine 5-Schicht-Folie der vorstehenden Schichten mit der Schichtenfolge O-H-P-H-O.

Bei der nichtverstreckten 3-Schicht-Folie beträgt die Schichtdicke der Schichten P und O vorzugsweise 25 bis 80 µm und der Schicht H 3 bis 12 µm.

Die (Mehrschicht)folie kann dabei uniaxial oder biaxial verstreckt sein. Vorzugsweise beträgt dabei das Reckverhältnis mindestens 1:2 in der jeweiligen Richtung. Besonders bevorzugt sind Reckverhältnisse von 1:2 bis 1:4, insbesondere 1:2,5 bis 1:3,3. Durch das Recken der Primärfolie mit den vorstehend angegebenen Schichtdicken sinken die Schichtdicken auf Werte von vorzugsweise 5 bis 50 µm für die Schichten P und O sowie 0,5 bis 4 µm für die Schicht H nach dem Recken und Thermofixieren.

### Herstellung der (Mehrschicht)folien

Die Erfindung betrifft auch ein Verfahren zur Herstellung der vorstehenden (Mehrschicht)folien durch
(a) (Co)extrudieren der Formmasse(n) der Schicht(en) zu einer (Mehrschicht)folie,
(b) Abkühlen der (co)extrudierten (Mehrschicht)folie und gegebenenfalls
(c) uniaxiales oder biaxiales Verstrecken und Thermofixieren der abgekühlten (Mehrschicht)folie.

Die Herstellung kann dabei nach Art einer Blasfolie durch Extrudieren durch einen ringförmigen Spalt hergestellt werden. Dabei wird die erhaltene Blasfolie in Luft oder Wasser gekühlt, anschließend zusammengelegt und an den Rändern beschnitten, so daß eine doppellagige Folie erhalten wird. Es kann auch die Herstellung einer Breitschlitzfolie erfolgen, wobei durch eine breite schlitzförmige Düse extrudiert wird, und die erhaltene Extrudatplatte auf eine Kühlwalze aufgebracht wird. Dieses Verfahren ermöglicht eine gute Steuerung der Folienstärke und Verstreckung durch Einstellung der Geschwindigkeit der Walze und der Kühlung der Walze.

Zur Herstellung biaxial orientierter Schlauchfolien erfolgt das Abkühlen nach der Extrusion vorzugsweise in einem Wasserbad, das eine Temperatur von 3 bis 30, vorzugsweise 5 bis 18°C aufweist. Danach wird die Folie durch Erhöhung des Luftinnendrucks gereckt und zuletzt durch Wärmebehandlung bei 80 bis 150°C für 5 bis 60 Sekunden auf den gewünschten Rückschrumpf thermofixiert.

Zur weiteren Verbesserung der Eigenschaften der erfindungsgemäßen (Mehrschicht)folien, insbesondere in bezug auf die Gasdurchlässigkeit und Lichtdurchlässigkeit, können diese mit Metallen bedampft werden. Die Erfindung betrifft auch derartige metallbedampfte (Mehrschicht)folien. Metallbedampfte Folien können beispielsweise zur Herstellung von Behältnissen zur Aufnahme von Blutkonserven und Blutplasma eingesetzt werden.

Die vorstehend beschriebenen (Mehrschicht)folien werden erfindungsgemäß verwendet zum Verpacken von Nahrungsmitteln, Getränken, chemischen, biologischen, medizinischen oder pharmazeutischen Produkten, insbesondere medizinischen Flüssigkeiten, oder medizinischen Vorrichtungen, oder zur Herstellung von Verpackungen oder Behältnissen dafür.

Besonders bevorzugt werden die (Mehrschicht)folien zum Verpacken von medizinischen Artikeln, wie medizinischen Produkten oder Vorrichtungen eingesetzt. Beispiele von medizinischen Produkten sind Flüssigkeiten, wie intravenöse Kochsalzlösung, Lösungen zur künstlichen intravenösen Ernährung, wie Fettsäurelösungen und Aminosäurelösungen. Beispiele von medizinischen Vorrichtungen sind Bestecke, wie Operationsbestecke, Katheter, Spritzen usw. Diese medizinischen Vorrichtungen werden in der Regel nach dem Verpacken, aber vor dem Verwenden der verpackten Vorrichtung mittels Dampf sterilisiert.

Die erfindungsgemäßen Folien können zur Herstellung von Verpackungen oder Behältnissen, wie Beuteln oder Schläuchen eingesetzt werden. Die Erfindung betrifft auch derartige Verpackungen oder Behältnisse. Bei der Herstellung derartiger Verpackungen oder Behältnisse liegt an der Innenwand vorzugsweise eine Schicht O vor, da diese Schicht durch Heißsiegeln unter Druck verschweißt werden kann. Derartige Verpackungen oder Behältnisse weisen eine sehr gute Siegelfähigkeit auf, wobei an der Siegel- oder Schweißstelle die mechanischen Eigenschaften nicht nennenswert oder nicht verschlechtert werden. Die erfindungsgemäßen Verpackungen oder Behältnisse können einfach gefüllt und geschlossen werden.

Die Erfindung wird nachstehend durch Beispiele näher erläutert:

### BEISPIELE

### Beispiele 1 bis 3 und Vergleichsbeispiele V4 bis V8:

10 kg einer Mischung äquimolarer Addukte von Adipinsäure und 1,6-Diaminohexan (AH-Salz) und Isophthalsäure und 1,6-Diaminohexan (IH-Salz) oder Sebacinsäure und 1,6-Diaminohexan (SH-Salz) in den in der nachstehenden Tabelle 1 angegebenen Mischungsverhältnissen (die Mischungsverhältnisse sind als Gewichtsteile der jeweiligen Struktureinheit im Copolyamid definiert und gemäß ISO 1874/1 bezeichnet) wurden als 60%ige wäßrige Lösung in einem 25 l fassenden Autoklaven vorgelegt und unter Rühren innerhalb von einer Stunde auf 280°C erhitzt. Ab dem Erreichen eines Druckes von 20 bar wurde durch Entspannen von Wasserdampf der Druck konstant gehalten. Bei 280°C/20 bar wurde für eine weitere Stunde gerührt, dann wurde innerhalb von 2 Stunden bei 280°C von 20 bar auf Normaldruck entspannt und anschließend das Polymer ausgetragen, in einem Wasserbad verfestigt und granuliert. Die Granulate wurden anschließend in einem Taumeltrockner für 8 Stunden bei 160°C unter leichtem Stickstoffstrom von 240 l/h nachkondensiert.

Als Vergleichsmaterial wurden PA66 ( Ultramid® A4 der BASF AG, VZ = 205 ml/g, Vergleichsbeispiel V5) und PA6 (Ultramid® B35 der BASF AG, VZ = 195 ml/g, Vergleichsbeispiel V8) verwendet.

Die Polyamide wurden bei einer Verarbeitungstemperatur von 265°C (bzw. 280°C in Beispielen 1 und V5) mit einem 30 mm-Extruder aufgeschmolzen und zu einlagigen Blasfolien von 50 µm Dicke und 200 mm Breite (doppeltflachgelegte Breite) verarbeitet. An diesen Folien wurden die in Tabelle 1 aufgeführten Messungen nach den Verfahren durchgeführt, wie sie vorstehend beschrieben sind.

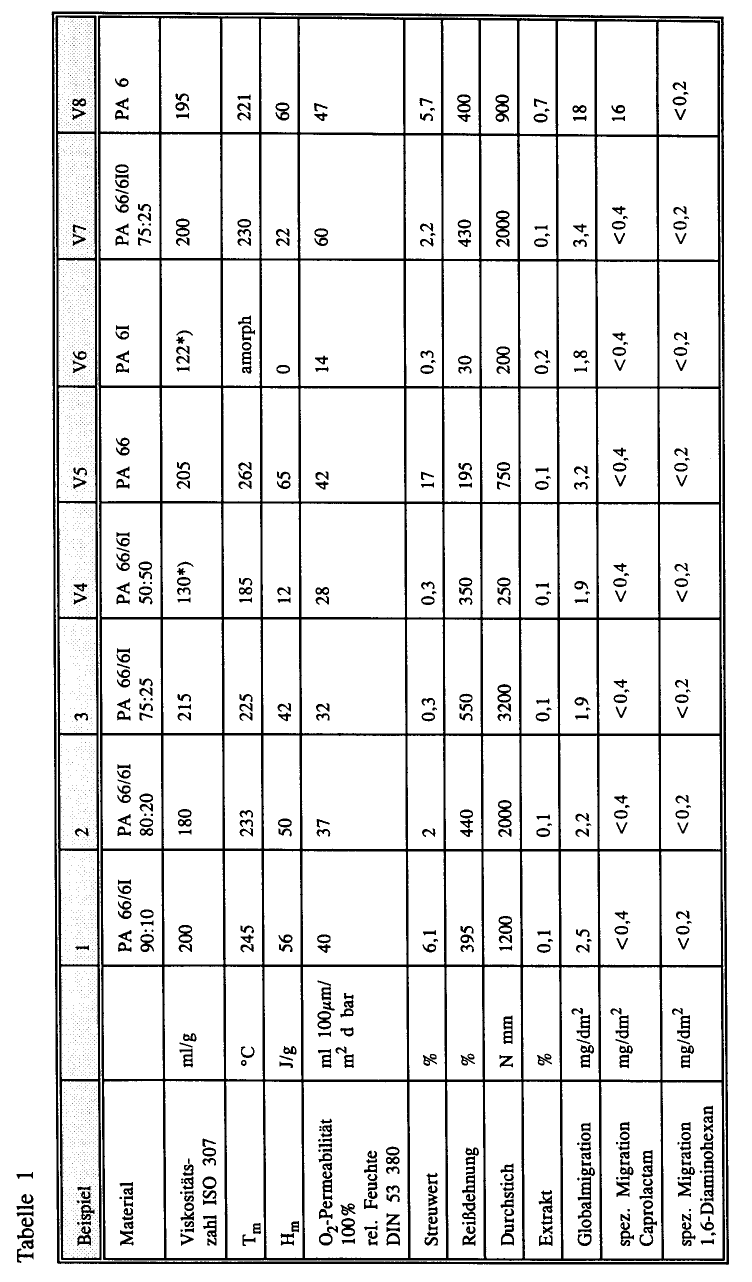

### Beispiel 9:

Mit einem PA 66/6I 75:25 gemäß Beispiel 3, einem Polypropylen (Novolen® 3425MC der BASF AG) und einem auf Polypropylen basierenden Haftvermittler (Polypropylen mit 1,2 Gew.-% Maleinsäureanhydrid gepfropft, MVI = 9 g/10 min bei 230°C und 2,16 kg) wurde mit einer Barmag-5-Schicht-Breitschlitzfolienanlage mit 3 Extrudern (Extruder 1 mit Polypropylen: 90 mm, Extruder 2 mit Polyamid: 60 mm, Extruder 3 mit Haftvermittler: 30 mm) eine 3-Schicht-Flachfolie
des Aufbaus
40 µm Polypropylen
8 µm Haftvermittler
25 µm Polyamid
sowie eine 5-Schicht-Flachfolie des Aufbaus
25 µm Polypropylen
8 µm Haftvermittler
25 µm Polyamid
8 µm Haftvermittler
25 µm Polypropylen
hergestellt.
Aus beiden Folien konnten problemlos Beutel mit einwandfreien Siegelnähten hergestellt werden (Siegeltemperatur 150°C).

### Beispiel 10:

Mit einem Schlauchfolienextruder von Plamex, Kelberg, wurde ein 3-Schicht-Folienschlauch aus den in Beispiel 9 angegebenen Komponenten extrudiert und in einem 8°C kalten Wasserbad zu einem völlig transparenten Schlauch verfestigt. Dieser Folienschlauch wurde dann durch ein 78°C warmes Wasserbad geführt und anschließend mit Druckluft im Verhältnis 1:2,6 längs und 1:2,8 in Umfangsrichtung gereckt. Danach wurde der Schlauch bei 150°C für 2 Sekunden thermofixiert. Die Stärke der Folienlagen betrug nach dem Recken
26 µm Polypropylen
1,3 µm Haftvermittler
24 µm Polyamid.

Die Folie wies die nachstehenden Eigenschaften auf:
Reißfestigkeit in Längsrichtung (ISO 527): 230 MPa
Reißdehnung in Längsrichtung (ISO 527): 120 %
Sauerstoffpermeation (DIN 53 380): bei 100 % rel. Feuchte und 23°C 80 ml/m² d bar.

Durch Siegeln von Schiauchabschnitten konnten Beutel mit einwandfreien Siegelnähten hergestellt werden.

## Patentansprüche

1. Verwendung eines Copolyamids aus
1,6-Diaminohexan als Diamin-Komponente A und
einer Dicarbonsäure-Komponente B aus 60 bis 90 Gew.-% Adipinsäure als Komponente B1 und 10 bis 40 Gew.-% mindestens einer aromatischen, nicht-linearen Dicarbonsäure als Komponente B2
zur Herstellung von Folien.

2. Verwendung nach Anspruch 1, dadurch gekennzeichnet, daß der Schmelzpunkt des Copolyamids 190 bis 250°C beträgt.

3. Verwendung nach Anspruch 1 oder 2, dadurch gekennzeichnet, daß die Kristallisationsenthalpie des Copolyamids 20 bis 60 J/g beträgt.

4. Folie aus einem Copolyamid, wie es in einem der Ansprüche 1 bis 3 definiert ist, mit einer Dicke von 10 bis 200 µm.

5. Mehrschichtfolie aus
mindestens einer Schicht P eines Copolyamids, wie es in einem der Ansprüche 1 bis 3 definiert ist, wobei die Schichtdicke 10 bis 200 µm beträgt,
mindestens einer Schicht O eines Polyolefins, ausgewählt aus Homo- oder Copolymerisaten des Ethylens und Propylens und
mindestens einer Schicht H eines Haftvermittlers für die Schichten P und O,
gegebenenfalls mindestens einer Schicht V eines zu mindestens 90 % verseiften Copolymerisats aus Ethylen und Vinylacetat, die vorzugsweise direkt benachbart zu einer Schicht P ist,
wobei jeweils zwischen Schichten P und O eine Schicht H angeordnet ist.

6. Mehrschichtfolie nach Anspruch 5, dadurch gekennzeichnet, daß es sich um eine Dreischichtfolie aus einer Schicht P des Copolyamids mit einer Schichtdicke von 10 bis 80 µm, einer Schicht H aus einem mit Carbonsäuregruppen modifizierten Polypropylen mit einer Schichtdicke von 0,5 bis 12 µm und einer Schicht O aus Polypropylen mit einer Schichtdicke von 10 bis 80 µm oder eine Fünfschichtfolie der vorstehenden Schichten mit der Schichtenfolge O-H-P-H-O handelt.

7. Folie nach Anspruch 4 oder Mehrschichtfolie nach Anspruch 5 oder 6, dadurch gekennzeichnet, daß sie uniaxial oder biaxial verstreckt ist.

8. Verfahren zur Herstellung einer Folie oder Mehrschichtfolie nach einem der Ansprüche 4 bis 7 durch
(a) (Co)extrudieren der Formmass(en) der Schicht(en) zu einer (Mehrschicht)folie,
(b) Abkühlen der (co)extrudierten (Mehrschicht)folie und gegebenenfalls
(c) uniaxiales oder biaxiales Verstrecken und Thermofixieren der abgekühlten (Mehrschicht)folie.

9. Verwendung von (Mehrschicht)folien nach einem der Ansprüche 4 bis 7 zum Verpacken von Nahrungsmitteln, Getränken, chemischen, biologischen, medizinischen oder pharmazeutischen Produkten, insbesondere medizinischen Flüssigkeiten, oder medizinischen Vorrichtungen, oder zur Herstellung von Verpackungen oder Behältnissen dafür.

10. Verpackung oder Behältnis aus einer (Mehrschicht)folie nach einem der Ansprüche 4 bis 7.
